(19) Europäisches Patentamt
European Patent Office
Office européen des brevets

(11) **EP 2 747 006 A1**

(12) **EUROPEAN PATENT APPLICATION**

(43) Date of publication:
**25.06.2014 Bulletin 2014/26**

(51) Int Cl.:
**G06Q 10/10** (2012.01)      **G06Q 50/00** (2012.01)
**G06Q 30/02** (2012.01)

(21) Application number: **12306613.6**

(22) Date of filing: **18.12.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Hedge, M Nidhi
92443 Issy-les-Moulineaux (FR)**
• **Massoulie, Laurent
92443 Issy-les-Moulineaux (FR)**
• **Bo, Jiang
Amherst, MA 01002 (US)**

(74) Representative: **Huchet, Anne et al
TECHNICOLOR
European Patent Operations
1-5, rue Jeanne d'Arc
92443 Issy-les-Moulineaux Cedex (FR)**

(54) **Incentivizing information propagation in a social network**

(57)   Method for incentivizing information propagation in a social network (2) comprising a plurality of nodes (4) among which a receiving node (k) is able to receive information from a source node (s), said information being propagated from the source node (s) to the receiving node (k) through a path (6) of the network (2), said path (6) comprising at least one edge of the network (2) directly linking a first relaying node (i) and a second relaying node (j), wherein the method comprises a step of rewarding to the second relaying node (j) a score each time that the receiving node (k) receives a useful content from the source node (s) through said path (6), characterized in that the first relaying node (i) is able to receive information from the second relaying node (j) at a given rate, and in that the method further comprises a step of periodically updating said rate as a function of a sum of the scores rewarded to the second relaying node (j).

FIG.1

## Description

FIELD OF THE INVENTION

The present invention generally relates to social networks.

More particularly, the invention deals with the propagation of information in a social network where several users publish information by pulling said information to neighboring users in the social network.

Thus, the invention concerns a method and a device for incentivizing information propagation in a social network. It also concerns a corresponding node of a social network and a computer program implementing the method of the invention.

BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Information dissemination has been transformed by the emergence of online social networks and their enthusiastic adoption by users. Users rely on trust relationships in social networks for accessing information. Thus, relationships form on the basis of the quality of information received, and in turn determine the speed of propagation in the network.

The study of the propagation of an information, called a rumor, in a social network goes back several years.

A typical model used in the prior art is the randomized broadcast model which is carried out in synchronized rounds. In each round, a user chooses a neighbor at random for propagating the rumor. The spreading mechanisms considered have been broadly of three types: push mechanisms where the user sends the rumor, if he has it, to the chosen neighbor; pull mechanisms where the user pulls the rumor from the chosen neighbor; and a combined mechanism, where the user pushes the rumor if he has it and pulls it if the chosen neighbor has it.

Some prior art considered an asynchronous model where each node contacts a neighbor after a random amount of time; nodes then pull content from the selected neighbor.

Furthermore, nowadays businesses use social networks for viral marketing. Viral marketing seeks to market a product, service, or idea by placing the marketing content in the hands of influential users that will distribute the content to other users. Unlike traditional marketing that may involve such activities as blasting advertisements on television or to various websites, viral marketing is often much cheaper and more effective at reaching target demographic audiences. Thus, companies are very interested in leveraging users' social networks to distribute information of interest to users in the networks. Besides, marketers want to know which users have been influential in getting information distributed, how information flows between users, and so forth so that future campaigns can be more effectively targeted.

In this context, the document US 2012/0158477 describes a social incentive system providing incentives and rewards to entities who participate in propagating the information, allowing heavy influencers to gain from their influence while a marketer rewards them.

However, previous works that have considered the problem of propagation of information in a social network in a distributed manner, do not consider the realistic scenario of a limited frequency of consultation as it is generally assumed that a user consults his neighbors continuously and among items of information he obtains, chooses to make available to his neighbors only a certain number of these items.

SUMMARY OF THE INVENTION

The present invention proposes a solution for improving the situation.

Accordingly, the present invention provides a method for incentivizing information propagation in a social network comprising a plurality of nodes among which a receiving node is able to receive information from a source node, said information being propagated from the source node to the receiving node through a path of the network, said path comprising at least one edge of the network directly linking a first relaying node and a second relaying node, wherein the method comprises a step of rewarding to the second relaying node a score each time that the receiving node receives a useful content from the source node through said path, characterized in that the first relaying node is able to receive information from the second relaying node at a given rate, and in that the method further comprises a step of periodically updating said rate as a function of a sum of the scores rewarded to the second relaying node.

A useful content here means a piece of information that arrived earliest at the receiving node, among all copies of this piece of information propagated in the network.

The given rate represents the rate at which a user associated with the first relaying node consults his neighbor associated with the second relaying node in order to get contents, such as news updates, videos, advertisements, promotions, or other messages. By updating the neighbor consultation rates, the method of the present invention provides an incentive mechanism that achieves information propagation within an optimal time in a distributed manner.

Besides, by this incentive mechanism, a user would transmit a content to his neighbors, i.e. followers or friends, even if said content does not particularly interest himself.

Advantageously, the first relaying node has a plurality of neighboring nodes directly linked to said first relaying node through the network and the sum of the rates at which the first relaying node is able to receive information from each neighboring node is equal to a constant total rate.

This total rate represents the total budget of attention of the user associated with the first relaying node. This budget of attention is naturally limited. Thus, the present invention, by automatically updating the rate at which the user consults each of his neighbors, enables an optimal allocation of the budget of attention of the user between his neighbors in the social network.

According to a first embodiment, the step of rewarding is implemented by the receiving node which rewards by itself the score to the second relaying node of the path.

More particularly, in this case, the receiving node rewards directly a score to each relaying node of the path. This embodiment is applicable when the receiving node has knowledge of all the relaying nodes constituting the path.

According to a second embodiment, the step of rewarding is implemented by the first relaying node.

In this case, the receiving node rewards a score to its neighboring relaying node in the path. Then, each relaying node rewards a score to its neighboring relaying node in the path.

This second embodiment is particularly interesting when the receiving node knows only its neighbors and has no knowledge of the network's topology.

Advantageously, the score is a monetary incentive.

Alternatively, the score is a non-monetary incentive, particularly a reputation-based incentive.

Reputation based incentives are particularly useful in networks like Klout or Yahoo answers, where query results are presented and rated as a function of reputation.

The invention further provides a device for incentivizing information propagation in a social network comprising a plurality of nodes among which a receiving node is able to receive information from a source node, said information being propagated from the source node to the receiving node through a path of the network, said path comprising at least one edge of the network directly linking a first relaying node and a second relaying node, wherein the device comprises a rewarding module for rewarding to the second relaying node a score each time that the receiving node receives a useful content from the source node through said path, characterized in that the first relaying node is able to receive information from the second relaying node at a given rate, and in that the device further comprises an updating module for periodically updating said rate as a function of a sum of the scores rewarded to the second relaying node.

The invention also provides a node of a social network comprising the device of the invention for incentivizing information propagation.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

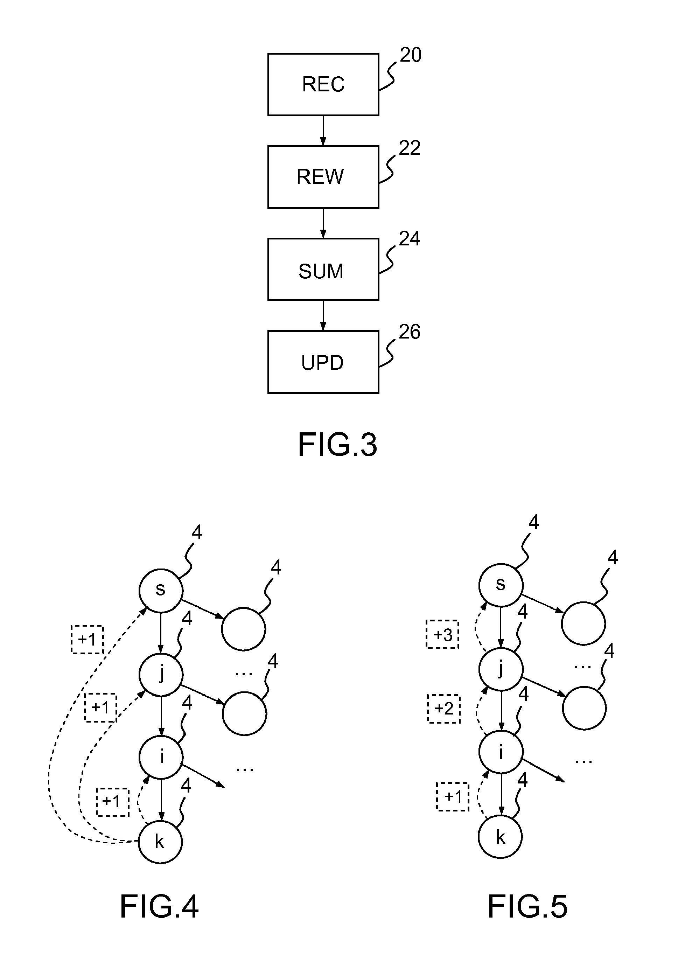

The invention thus provides a computer-readable program comprising computer-executable instructions to enable a computer to perform the method of the invention. The diagram of figure 3 illustrates an example of the general algorithm for such computer program.

BRIEF DESCRIPTION OF THE DRAWINGS

The present invention is illustrated by way of examples, and not by way of limitation, in the figures of the accompanying drawings, in which like reference numerals refer to similar elements and in which:

- Figure 1 is a schematic view of a social network according to an embodiment of the present invention ;

- Figure 2 is a schematic view of a device according to an embodiment of the present invention ;

- Figure 3 is a flowchart showing the steps of a method according to an embodiment of the present invention ;

- Figure 4 shows an example of an incentive mechanism according to a first embodiment of the invention ; and

- Figure 5 shows an example of an incentive mechanism according to a second embodiment of the invention.

DETAILED DESCRIPTION OF PREFERRED EMBODIMENTS

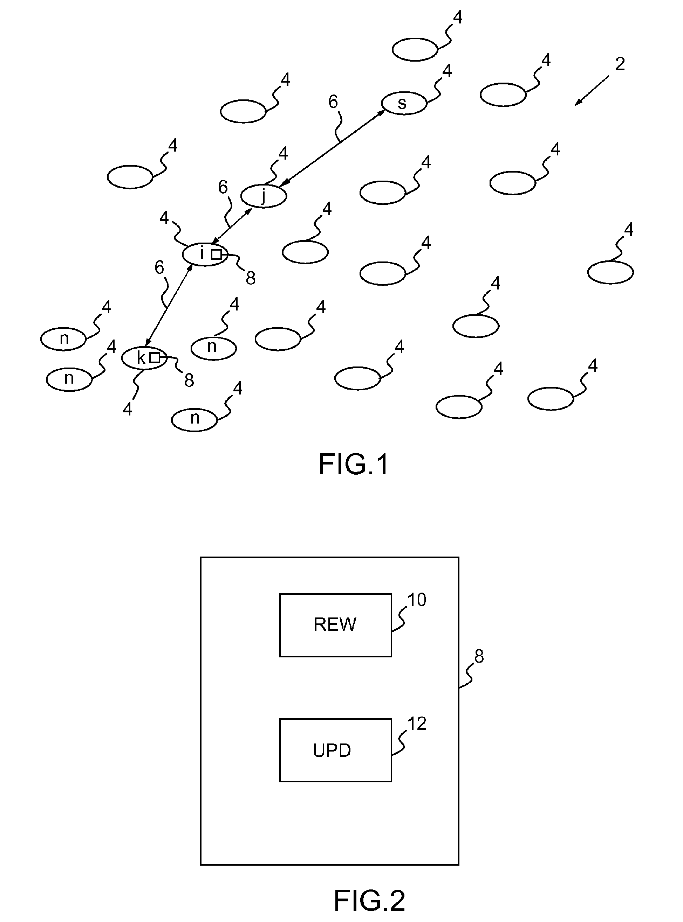

Referring to Figure 1, there is shown therein a schematic view of a social network 2 implementing the method of the invention. This social network 2 may be for example Facebook, Twitter, Klout, Linkedin, Viadeo, Yahoo answers or any other social network 2 in which contents may be exchanged between users.

The social network 2 comprises a plurality of nodes 4 associated to a plurality of m users.

Among the plurality of nodes 4, a node k is able to receive information from another node s, called a source, said information being propagated from the source s to the node k through a path 6 of the social network 2, said path comprising at least one edge (j,i) of the network directly linking a first relaying node i and a second relaying node j.

The existence of an edge between both relaying nodes i, j means that there's a link between the users associated to these nodes, i.e. these users are in contact with each other.

The path 6 represented as an example comprises the first relaying node i, the second relaying node j and the node s.

Each node 4 consists in a user's terminal associated with a user connected to the social network 2. Each user has a set of friends, or contacts, that he links to, or follows, in order to get content such as news updates, videos, or other messages. Each user then makes all content that he holds available to his followers, such as on the Facebook wall or on the Twitter stream.

In a preferred embodiment of the invention, rather than a single source of content, all users can create content, at a given frequency, i.e. all nodes 4 of the network may constitute a source s of information.

In Figure 1, it is assumed that the user associated with the node k has a plurality of contacts which are associated with the neighboring nodes n of the node k. In this description, the term "a neighboring node" or "a neighbor" of the node k means here that there is a direct link between said neighbor and the node k, i.e. information is propagated directly between them and not through a relaying node.

Besides, it is assumed that the users seek to obtain all content circulating in the social network 2. Thus, the users consult their contacts for the latest updates of information with the objective of minimizing the average delay for obtaining all information.

As a user may receive a same content more than one time, for example, from different contacts of said user, he considers only the earliest received content as a useful content. The copies of this useful content are not interesting for the user.

In the example, represented in Figure 1, the user associated with the node k receives for the first time the content propagated from the source s along the path 6. It is assumed that it receives this useful content through his neighbor i. Thus, said neighbor i is called a useful neighbor.

As in real online social networks, users have a limited budget of attention i.e. the total frequency with which they may consult their contacts is limited. As such, this frequency must be allocated among the contacts in a manner that optimizes the delay for obtaining useful content.

The present invention provides, preferably each node 4 of the social network 2, with a device 8 for incentivizing information propagation in said social network 2 under the limited budget of attention of users constraint.

The device 8 is represented on Figure 2.

The represented device 8 is, for instance, the incentivizing device implemented either in the node k or in the first relaying node i. Due to the limited budget of attention of the user associated with the first relaying node i, it is assumed that said first relaying node i is able to receive information from the second relaying node j at a rate $y_{ij}$.

The device 8 comprises a rewarding module 10 for rewarding to the second relaying node j a score each time that the node k receives a useful content from the node s through the path 6. The device 8 further comprises an updating module 12 for periodically updating the rate $y_{ij}$ in order to optimize the delay for obtaining useful content by the node k.

The operations implemented by the modules 10, 12 of the device 8 will be detailed in the following with reference to the flowchart of Figure 3.

As shown on Figure 3, at a first step 20, the node k receives the useful content from the source s for the first time through the first relaying node i which is the useful neighbor.

At step 22, each node along the path 6 linking the source s and the node k, that was involved in relaying the useful content, is rewarded a score.

According to a first embodiment, represented on Figure 4, this rewarding is performed by the device 8 implemented in the node k which rewards by itself a score $+1_k$ to each node of the path 6, and particularly to the node j. In the represented example, the score $+1_k$ is equal to +1.

According to a second embodiment, represented on Figure 5, the device 8 implemented in the node k rewards a score $+1_k$ k to its neighboring relaying node in the path 6, i.e. the first relaying node i. Then, the first relaying node i rewards a score aggregating the score $+1_k$ that it received from the node k with its own score $+1_i$ to its neighboring relaying node j in the path 6, , i.e. to the second relaying node j. Thus, the score $+1_k$ rewarded to the second relaying node j in this case is the sum of the score $+1_k$ rewarded by the node k to the first relaying node i and of the score $+1_i$ rewarded to the second relaying node j from the first relaying node i. In the represented example, the scores $+1_k$, $+1_i$, $+1_j$ rewarded by the nodes k, i, j, respectively, are equal to +1. Consequently, the first relaying node i is rewarded a score equal to +1, the second relaying node j is rewarded a score of +2 and the source s is rewarded a score of +3.

The rewarded scores are considered as incentives because, as feedback, they represent the importance of a link, thus the value of the incentive to provide to bring about a favorable change in that link's allocation. These incentives may be monetary or non-monetary. Non-monetary incentives might include a form of reputation or recognition, such as in networks like Klout. In such networks, users receive votes that count towards their reputation or expertise, in return for some service, like answering questions, they provide to other users. A gain in reputation incites users to respond favorably when there is a possibility of receiving such votes. Remarkably, the incentivizing method of the present invention incentivizes a user to "serve" other users, thus going beyond a selfish allocation of attention.

At step 24, the first relaying node i keeps a score $O_j^i$ for the second relaying node j equal to the sum of scores received by the node j at step 22 each time said node j relayed a useful content to the node k.

By considering that the time scale at which a score is rewarded is equal to a slot, i.e. a score is sent per slot, at the end of a time period t which is chosen much longer than the slots over which the scores are sent for example t=p*slot where p can be equal to at least 50 or 100, for example, the updating module 12 of the device 8 implemented in the first relaying node i updates the rate $y_{ij}$ to be used for the next time period t+1 as follows :

$$y_{ji}(t+1) = y_{ji}(t) - \gamma_t \left( \delta_{ji}(t) - \frac{\sum_k \delta_{ki}(t)}{d_i} \right),$$

where

$$\delta_{ji}(t) = -\frac{1}{m(m-1)y_{ji}(t)^2} O_j^i, \gamma_t = 1/t.$$

Thus, the present invention remarkably provides an incentive mechanism adjusting neighbor consultation rates so that propagation of content is optimal.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

**Claims**

1. Method for incentivizing information propagation in a social network (2) comprising a plurality of nodes (4) among which a receiving node (k) is able to receive information from a source node (s), said information being propagated from the source node (s) to the receiving node (k) through a path (6) of the network (2), said path (6) comprising at least one edge of the network (2) directly linking a first relaying node (i) and a second relaying node (j), wherein the method comprises a step of rewarding (22) to the second relaying node (j) a score each time that the receiving node (k) receives a useful content from the source node (s) through said path (6), **characterized in that** the first relaying node (i) is able to receive information from the second relaying node (j) at a given rate, and **in that** the method further comprises a step of periodically updating (26) said rate as a function of a sum of the scores rewarded to the second relaying node (j).

2. Method of claim 1, wherein the first relaying node (i) has a plurality of neighboring nodes (n) directly linked to said first relaying node (i) through the network (2) and the sum of the rates at which the first relaying node (i) is able to receive information from each neighboring node (n) is equal to a constant total rate.

3. Method of claim 1 or 2, wherein the step of rewarding (22) is implemented by the receiving node (k) which rewards by itself the score (+1) to the second relaying node (j) of the path.

4. Method of claim 1 or 2, wherein the step of rewarding (22) is implemented by the first relaying node (i).

5. Method of any of claims 1 to 4, wherein the score is a monetary incentive.

6. Method of any of claims 1 to 4, wherein the score is a non-monetary incentive, particularly a reputation-based incentive.

7. Device (8) for incentivizing information propagation in a social network (2) comprising a plurality of nodes (4) among which a receiving node (k) is able to receive information from a source node (s), said information being propagated from the source node (s) to the receiving node (k) through a path (6) of the network, said path (6) comprising at least one edge of the network (2) directly linking a first relaying node (i) and a second relaying node (j), wherein the device (8) comprises a rewarding module (10) for rewarding to the second relaying node (j) a score each time that the receiving node (k) receives a useful content from the source node (s) through said path (6), **characterized in that** the first relaying node (i) is able to receive information from the second relaying node (j) at a given rate, and **in that** the device (8) further comprises an updating module (12) for periodically updating said rate as a function of a sum of the scores rewarded to the second relaying node (j).

8. Node (4) of a social network (2) comprising the device (8) of claim 7.

9. A computer-readable program comprising computer-executable instructions to enable a computer to perform the method of any one of claims 1 to 6.

FIG.1

FIG.2

FIG.3

FIG.4

FIG.5

Europäisches
Patentamt

European
Patent Office

Office européen
des brevets

# EUROPEAN SEARCH REPORT

Application Number

EP 12 30 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités", JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE, vol. 30, no. 11, 1 November 2007 (2007-11-01), pages 592-593, XP007905525, ISSN: 0170-9291 * Statement in accordance with the Notice from the European Patent Office dated 1 October 2007 concerning business methods(OJ 11/2007; p592-593) The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-9 | INV. G06Q10/10 G06Q50/00 G06Q30/02 |

| TECHNICAL FIELDS SEARCHED (IPC) |
|---|
| G06Q |

The present search report has been drawn up for all claims

| Place of search | Date of completion of the search | Examiner |
|---|---|---|
| The Hague | 26 April 2013 | Nicoli, Félix |

EPO FORM 1503 03.82 (P04C01)

Europäisches
Patentamt

European
Patent Office

Office européen
des brevets

**EUROPEAN SEARCH REPORT**

Application Number

EP 12 30 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. *<br>----- | | |

TECHNICAL FIELDS
SEARCHED       (IPC)

The present search report has been drawn up for all claims

| Place of search | Date of completion of the search | Examiner |
|---|---|---|
| The Hague | 26 April 2013 | Nicoli, Félix |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120158477 A